Europäisches Patentamt

European Patent Office

Office européen des brevets

(19)

(11) **EP 1 292 913 B1**

(12) **EUROPEAN PATENT SPECIFICATION**

(45) Date of publication and mention
of the grant of the patent:
**17.08.2005 Bulletin 2005/33**

(51) Int Cl.[7]: **G06K 17/00**

(86) International application number:
**PCT/US2001/018900**

(21) Application number: **01942185.8**

(22) Date of filing: **12.06.2001**

(87) International publication number:
**WO 2001/097167 (20.12.2001 Gazette 2001/51)**

(54) **SYSTEM AND METHOD FOR REAL-TIME TRACKING OF PACKAGES**

SYSTEM UND VERFAHREN ZUR ECHTZEITVERFOLGUNG VON PAKETEN

SYSTEME ET PROCEDE DE LOCALISATION DE PAQUETS EN TEMPS REEL

(84) Designated Contracting States:
**AT BE CH CY DE DK ES FI FR GB GR IE IT LI LU
MC NL PT SE TR**

(30) Priority: **12.06.2000 US 211229 P**

(43) Date of publication of application:
**19.03.2003 Bulletin 2003/12**

(60) Divisional application:
**03005905.9 / 1 327 931**

(73) Proprietor: **UNITED PARCEL SERVICE OF
AMERICA, INC.
Atlanta, GA 30328 (US)**

(72) Inventors:
• **FRIEDLEY, Paul D.
New Freedom, PA 17349 (US)**
• **SALZMAN, Dave
Alpharetta, GA 30022 (US)**
• **HAMBLEN, Guy A
New Foundland, NJ 07435 (US)**
• **METAXATOS, Paul
Brookline, MA 02446 (US)**
• **BURDICK, Joseph
Pomona, NY 10970 (US)**
• **GLAVE, Gerald
Sparta, NJ 07871 (US)**
• **MARSH, Donald
Liberty, MO 64068 (US)**

(74) Representative: **Chettle, Adrian John et al
Withers & Rogers LLP
Goldings House,
2 Hays Lane
London SE1 2HW (GB)**

(56) References cited:
EP-A- 0 536 579          EP-A- 0 997 810
WO-A-99/22339           US-A- 5 410 141
US-A- 5 594 810          US-A- 5 959 275
US-A- 5 973 676

• PATENT ABSTRACTS OF JAPAN vol. 017, no.
170 (P-1515), 31 March 1993 (1993-03-31) & JP 04
329458 A (MATSUSHITA ELECTRIC IND CO
LTD), 18 November 1992 (1992-11-18)
• PATENT ABSTRACTS OF JAPAN vol. 1995, no.
02, 31 March 1995 (1995-03-31) & JP 06 324805 A
(SEIKO EPSON CORP), 25 November 1994
(1994-11-25)

EP 1 292 913 B1

**Description**

FIELD OF THE INVENTION

This invention relates to real-time package tracking systems and methods, and to portable hand held devices configured to acquire information through multiple input interfaces and to provide acquired information to a central computer from remote locations. The device and its method of use are particularly useful in the field of parcel delivery and tracking. In one embodiment, the system of the present invention incorporates improvements in the Delivery Information Acquisition Device (DIAD) presently utilized by United Parcel Service.

BACKGROUND OF THE INVENTION

In routine package delivery services, United Parcel Service (UPS) delivery drivers obtain data using a DIAD device. The DIAD is an electronic clipboard that replaces the driver's written documents and transmits shipment information directly into the UPS tracking system. Because the DIAD electronically records delivery information it eliminates million sheets of paper a year and allows UPS to capture data and electronic signatures at a major point of contact - upon delivery to the recipient. Currently, more than 60,000 delivery personnel utilize such DIAD devices.

To capture digital recipient signatures, the DIAD device contains an LCD display and a separate signature capture window that accepts input from a stylus. When the customer signs in the capture window using the stylus, the signature appears in the LCD display. The DIAD's capture of digitized recipients' signatures enables these signatures to be available electronically for delivery verification. Signatures are downloaded into a mainframe that is accessible by customer service representatives and customers. Therefore, business customers that are connected electronically to UPS through secure connections (e.g., via the Internet) have access to the digitized signatures so they can pass them on to customers with inquiries. Similarly, when a customer claims a package was not delivered, the customer (or a customer service representative) can determine its status, specifically, whether the package was delivered, and if so, who signed for it.

In a typical delivery, the driver identifies a package to be delivered using a laser-scanner built into or attached to the DIAD device. In this manner the DIAD captures into its memory data from bar coded packages. Additional data collected by the DIAD upon delivery is also captured using key entry, barcode scanning, electronic signature capture, and electronic data transfer. Once collected, package tracking information is transferred to a mainframe based package tracking system (PTS) in real time whenever the driver returns to his or her vehicle and inserts the DIAD into a delivery vehicle adapter (DVA) in the delivery vehicle which is an onboard cradle into which UPS drivers insert the DIAD in order to transmit data to the UPS host system over a wireless network. The adapter provides a communications link between the DIAD and vehicle-mounted data radio equipment, namely, a cellular telephone modem that can communicate with the mainframe computer via a nationwide cellular network. Once received, the information is used to ensure that tracking information available to customers is kept current and available to customers via the Internet or telephone call-in center. The DIAD also has an acoustic link to a standard telephone so that tracking information can be transmitted when the driver will be away from the vehicle for an extended period.

Although the DIAD has been effective, it is limited by a number of characteristics which limit its effectiveness as a tool for real-time tracking of packages. First, as previously noted, the DIAD device contains an LCD display and a separate signature capture window that accepts input from a stylus. When the customer signs in the capture window using the stylus, the signature appears in the LCD display. However, the customer signature does not appear within the signature capture window during customer execution of the signature. Thus, signing the signature capture window using the stylus is equivalent to writing using invisible ink. Some customers have been uncomfortable with the remote appearance of their signature or have found it difficult to sign without seeing the result of their writing appear directly under the stylus. Furthermore, because the touch panel of the signature capture device may be constructed of a resistive material, variations in the pressure exerted by the person signing can create spurious voltages leading to a poor image of the signature or poor accuracy in reproducing the track of the stylus. For example, when a person lifts a stylus from such a device, the release of pressure can be misinterpreted as a written line. Prior attempts to solve this problem have typically involved making the screen structurally less sensitive to pressure, which also results in less accuracy. Thus, there has been a need for a better quality representation of signatures and better tracking between the stylus movement and the graphic representation thereof as the stylus moves across the screen.

Secondly, in using the DIAD device to obtain a customer's signature, the driver must hand the DIAD device to the customer and reverses it so that the customer can sign in the proper orientation. After the customer signs, the driver retrieves the device and turns it back around to view the signature and key enter the customer's name. Therefore, the driver and customer both view the DIAD device from the same perspective. The passing and manipulation of the device for this purpose uses time and increases the risk that the device will be dropped and possibly damaged. Furthermore, because the customer controls the device, it is possible that the customer may inadvertently press one or more buttons on the DIAD device which require driver correction.

Third, although the DIAD can communicate with a mainframe computer via a nationwide cellular network, this requires the DIAD to be inserted into the vehicle adapter, which provides the communications link between the DIAD and vehicle-mounted data radio equipment, namely, a cellular telephone modem that can communicate with the mainframe computer. As an alternative, the DIAD has an acoustic link to a standard telephone so that tracking information can be transmitted when the driver will be away from the vehicle for an extended period. However, this requires that the driver spend valuable time sending the information using a relatively slow acoustic link. Thus, there is no means of rapidly communicating with the mainframe computer in near real-time after effecting delivery of a package where the DIAD device is not immediately placed in the vehicle adapter after package delivery. Furthermore, while data may be transferred from the DIAD to the mainframe, there is no two-way communication functionality allowing the DIAD to receive data, which may be advantageous when updating information stored in the DIAD or when communicating with delivery personnel who have left their vehicle.

What is needed is an improved DIAD that includes an improved signature capture screen that digitally illustrates a signature while it is being written, an improved signature screen that permits a driver to maintain control of the DIAD while a customer signature is received, and a built in cellular antenna to transmit shipping data to a mainframe when the DIAD is not docked in the DVA.

WO-A-99/22339 discloses a package tracking system corresponding to the preamble of the claims appended hereto. Direct communication between a portable data acquisition device and a remote mainframe depository via radio is not disclosed.

SUMMARY OF THE PRESENT INVENTION

The present invention is an improved data acquisition system, device and method providing real-time tracking of packages. According to the invention, there is provided a package tracking system, comprising:

> a portable data acquisition device capable of collecting and storing package data, wherein the data acquisition device includes at least one data input device;
> a docking device including data storage, wherein the data acquisition device is associated with the docking device, wherein the data acquisition device is adapted to communicate with the docking device via an infrared communications port, and wherein the data acquisition device is adapted to transmit collected and stored package data from the data acquisition device to the docking device; and
> a remote mainframe data repository, wherein the mainframe data repository is capable of receiving collected and stored package data from the data acquisition device and from the docking device, and wherein the mainframe data repository maintains a package database adapted to include the collected and stored package data characterised in that said data acquisition device includes a wireless radio, the docking device includes a communications radio, and the remote depository is capable of receiving data directly from said wireless radio and from said communications radio.

According to one aspect of the invention, the at least one data input device comprises a touch screen. According to another aspect of the invention, the touch screen comprises a signature capture element capable of receiving signatures input using a stylus, and the touch screen is capable of illustrating a signature during execution of the signature. According to yet other aspects of the present invention, the touch screen includes an LCD display and is capable of inverting the signature after the execution of the signature is complete.

Preferably, the data acquisition device further comprises a wireless radio antenna, in electrical communication with the wireless radio, and wherein the wireless radio antenna is wholly contained internal to the data acquisition device. The tracking system may also include a packet data radio network for transmitting communications from the data acquisition device to the mainframe data repository. Additionally, the wireless radio may be a two-way radio through which the data acquisition device can receive wireless communications.

According to yet another aspect of the present invention, the at least one data input device is a keyboard comprising a plurality of keys, and at least one of the plurality of keys has a plurality of functions associated therewith. Moreover, the data acquisition device can include a touch screen, and at least one function of the plurality of functions corresponds to the at least one of the plurality of keys is displayed on the touch screen.

According to additional aspects of the present invention, the data acquisition device includes an acoustical modem, and the docking device may be located in a delivery vehicle. The tracking system may also include a base station into which the data acquisition device is docked at the end of the day. The base station is preferably in communication with the mainframe data repository via a communication network, such as a PSTN or the Internet. According to another aspect of the present invention, the data acquisition device includes a memory, wherein the memory stores the collected package data, and wherein collected data transmitted directly from the data acquisition device to the mainframe data repository is distinguishable from collected data not directly transmitted to the mainframe data repository.

There is disclosed as part of the system of the present invention, a hand held data acquisition device.

The hand held data acquisition device of the present invention comprises a unique combination of features resulting in more efficient acquisition and remote transfer of information, as well as a device that is more durable and easier to use. Broadly stated, these features include data entry by keypad, symbol scanner, and signature capture, and an on-board data radio for transmission of data to a remote computer. In a preferred configuration, the device also includes an infrared data link for communication via the vehicle adapter, an acoustic data link, an illuminator for lighting a label beneath the device, a phosphorescent membrane keypad, multiple rows of programmable "soft keys" in the display, and integration of the signature capture function into the main display screen. The components are enclosed in a case that is hourglass shaped for easy handling, with rounded, rubber coated edges, and an internal peripheral buffer zone to minimize damage if dropped. Other features are described in other parts of this application.

The data acquisition device includes at least one data input device, for inputting package tracking data into the data acquisition device, a memory, for storing the package tracking data input into the data acquisition device, a wireless radio, wherein the wireless radio transmits the stored package tracking data directly to a remotely located mainframe data repository, and an antenna, wherein the antenna facilitates the transmission of the stored package tracking data to the remotely located mainframe data repository via a packet data radio network, and wherein the antenna comprises a first metal strip at least partially embedded within a foam member and a second metal strip on the surface of the foam member.

According to one aspect of the present invention, the entire antenna is internal to the data acquisition device. The second metal strip of the antenna may also include at least one lengthwise portion oriented at least 90 degrees from at least one other lengthwise portion of the second metal strip, and the entire second metal strip may span the entire width of the data acquisition device.

The second metal strip may comprise a plurality of metal strip segments, and wherein at least one of the plurality of metal strip segments comprises a widthwise portion at least 0.75 centimeters long.

According to yet another aspect of the present invention, the at least one data input device is a touch screen, having both LCD and signature capture capability, wherein the touch screen receives signatures entered using a stylus.

The screen also includes signature reproducing capability such that a signature is digitally reproduced on the screen during execution of the signature. Moreover, according to the invention, the data acquisition device may further include a signature flipping element, which flips a digitally reproduced signature vertically such that the digitally reproduced signature is inverted with respect to the signature digitally reproduced on the screen after execution of the signature.

According to yet another aspect of the present invention, the package data transmitted to the mainframe data repository can include a digitized customer signature, data representing the completion of a package delivery, or data representing the identity of a package. Additionally, according to another embodiment of the present invention, the at least one data input device may be a bar code scanner or a keyboard comprising a plurality of keys, wherein at least one of the plurality of keys is a 'soft key' having a plurality of functions associated therewith. Accordingly, the data acquisition device includes a touch screen, and at least one function of the plurality of functions corresponding to the at least one of the plurality of keys is displayed on the touch screen.

Using the package tracking system according to the present invention and method, delivery data may be uploaded immediately upon receipt. Furthermore, two-way radio capabilities also allow drivers to maintain contact with dispatchers even while away from their vehicles.

Moreover, devices according to the present invention can transmit package information in three-tenths of a second, as opposed to approximately 10 seconds using the conventional data acquisition device disclosed above.

BRIEF DESCRIPTION OF THE DRAWINGS

Having thus described the invention in general terms, reference will now be made to the accompanying drawings, which are not necessarily drawn to scale, and wherein:

FIG. 1 is a block diagram of a system of the present invention, showing the methods by which a data acquisition device communicates with a mainframe data repository, according to one aspect of the present invention.

FIG. 2 is a block diagram of another system of the present invention, illustrating the download of data from the data acquisition device to a base station, according to one aspect of the present invention.

FIG. 3 shows a perspective view of a data acquisition device of the present invention, according to one embodiment of the present invention.

FIG. 4 shows a top view of a data acquisition device of the present invention, including a cutaway view showing the packet data radio network antenna located at the top of the data acquisition device, according to one embodiment of the present invention.

FIG. 5A shows a rear view perspective of the packet data radio antenna of FIG. 4, according to one aspect of the present invention.

FIG. 5B shows a bottom view perspective of the packet data radio antenna of FIG. 4, according to one aspect of the present invention.

FIG. 6 shows a block diagram of the components of the data acquisition device, including a signature flipping element and a signature display element, according to one embodiment of the present invention.

FIG. 7A shows a top view of the data acquisition device, immediately after receipt of a customer signature, according to one embodiment of the present invention.

FIG. 7B shows a top view of the data acquisition device, including an inverted representation of the customer signature shown in FIG. 7A, according to one aspect of the present invention.

FIG. 8 shows a flow chart illustrating the process by which the data acquisition device screen is inverted for viewing by customers, according to one aspect of the invention.

FIG. 9 shows a flow chart illustrating the process by which signatures are represented on a display of the data acquisition device, according to one embodiment of the present invention.

DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention as defined by the appended claims to those skilled in the art. Like numbers refer to like elements throughout.

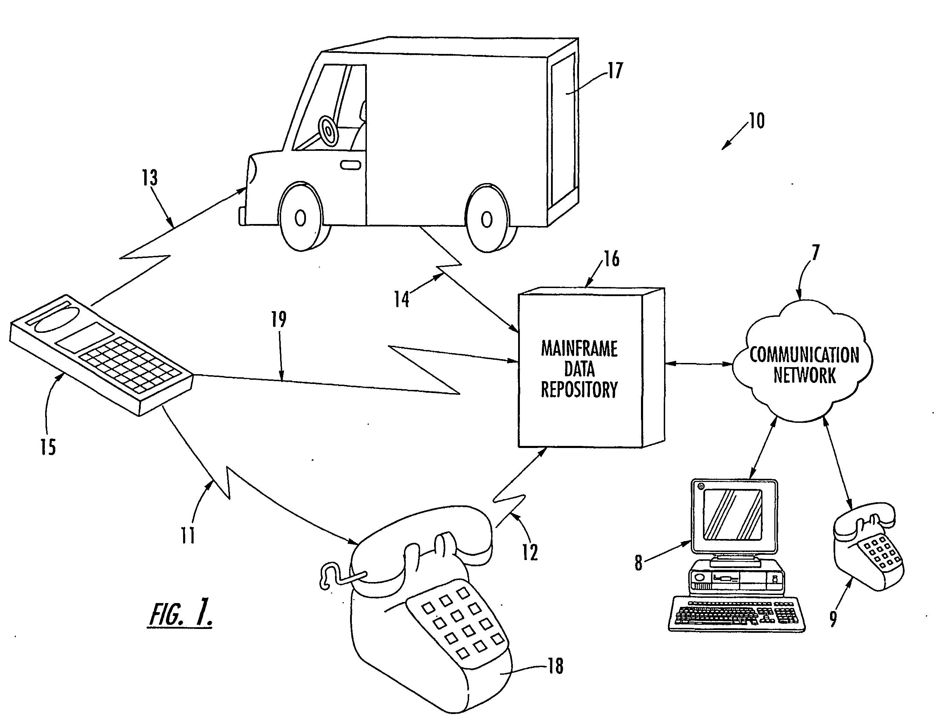

FIG. 1 shows a package tracking system 10 according to one embodiment of the present invention. The package tracking system 10 preferably includes a portable data acquisition device 15, a mainframe data repository 16, a delivery vehicle 17, a telephone 18, a communication network 7, and a computer 8 and/or telephone 9. As will be explained in greater detail below, the data acquisition device 15 collects package tracking data, typically at the package delivery location, stores the package tracking data, and forwards the package tracking data to the mainframe data repository 16 via one of three communication methods. The package tracking data is received and stored at the mainframe data repository 16 in a package tracking database (not illustrated), which may be accessed by customers and/ or customer service representatives via one or more computers 8 and telephones 9 communicating with the mainframe data repository 16 over a communication network 7. Preferably the communication network 7 is the Internet, and customers (e.g., shippers or recipients) and/or customer service representatives utilize one or more graphical user interfaces, such as web pages, to locate and view the delivery status of packages in transit. Alternatively, it should be appreciated by those of skill in the art that the communication network 7 may also represent one or more PSTNs, wide area networks (WANs), local area networks (LANs), cellular networks, or the like, through which computers, wireless devices, and/or telephones can access data residing at the mainframe data repository 16. Additionally, customer service representatives and/or customers having authorization may also access package tracking data directly from the mainframe data repository 16. Using the system 10, package deliveries can be monitored in real time as packages are delivered by delivery personnel.

As illustrated in FIG. 1, the data acquisition device 15 of the present invention may be in communication with the mainframe data repository 16 through three different methods. Because three different methods of communication are available, package tracking is ensured in every environment. First, the data acquisition device 15 of the present invention can communicate with the mainframe data repository 16 via the delivery truck 17. In this scenario, the data acquisition device 15 transmits collected and stored package tracking directly to a docking device or delivery vehicle adapter (DVA) (not illustrated) located within the delivery vehicle 17 via communication link 13. According to one aspect of the present invention, the data acquisition device 15 is physically inserted into the DVA, which is configured to receive the data acquisition device 15. The communication link 13 between the data acquisition device 15 and DVA may be through infrared communication and an infrared communication port located in the data acquisition device 15, or via a direct communication link established when the data acquisition device 15 is inserted into the DVA, as is well known to those of skill in the art. After the package tracking data is communicated to the DVA, the DVA transmits the data to the mainframe data repository 16 via wireless communications link 14. According to one aspect of the invention, the wireless communications link 14 is a cellular communications network. However, it should be appreciated that the communications link 14 may also utilize a public switch telephone network (PSTN), or the like, to communicate with the mainframe data repository 16. Additionally, although not illustrated, if for some reason the mainframe data repository 16 is unavailable or off line, the cellular network and/or PSTN may reroute the package tracking data to another entity functioning as a data repository.

A second method by which the data acquisition device 15 communicates package tracking data to the mainframe data repository is via a conventional telephone 18. In this embodiment the data acquisition device 15 preferably contains an internal acoustic coupler for communicating over an ordinary telephone line. Therefore, communications link 11 is representative of the acoustic communication between the data acquisition device 15 and the telephone 18. In this scenario, package delivery personnel dial a mainframe data repository access number to access the mainframe data repository **16** via a PSTN, illustrated as communications link **12.** After dialing the mainframe data repository **16,** a speaker located in the data acquisition device **15** may then be held up to the telephone 18 microphone such that package tracking data can be communicated to the mainframe data repository **16** from the data acquisition device **15** via acoustical signals in a manner similar to conventional acoustical modems, as known to those of ordinary skill in the art. Alternatively, although not illustrated, the data acquisition device **15** can also include a modem and telephone jack such that the data acquisition device **15** can hook up to a PSTN directly, and automatically download the package tracking data to the mainframe data repository via a PSTN.

The third, and preferred method of communicating package tracking from the data acquisition device **15** to the mainframe data repository **16** is directly via a packet data radio network **19** using an internal packet data radio located within the data acquisition device **15.** The packet data radio network **19** may also utilize one or more PSTNs, LANs, WANs, or the like, for communicating package tracking data to the mainframe data repository **16.** According to one aspect of the present invention the internal packet radio located within the data acquisition device **15** is an Ardis® packet data radio, as are well known to those of skill in the art. Like the two communication methods previously discussed, the data acquisition device **15** collects and stores the package tracking data. However, instead of communicating the package tracking data indirectly to the mainframe data repository via a delivery vehicle **17** and DVA, or via an acoustical link with a conventional telephone, the package tracking data is communicated directly to the mainframe data repository **16** immediately after being received and stored in the data acquisition device **15.**

The direct communication link via the packet data radio network provides a number of advantages over the two forms of communication previously discussed. First, using the direct link, package tracking data may be communicated immediately after being received in the data acquisition device **15,** as opposed to being communicated to the mainframe data repository **16** only after the data acquisition device **15** has been placed in a DVA or the package delivery personnel locates a conventional telephone. Secondly, where package delivery personnel are away from the delivery truck, and DVA, for a period of time (e.g., multiple deliveries are required in one location), the mainframe data repository **16** is continuously updated with real-time package data using the packet data radio, as opposed to requiring the personnel to return to the delivery vehicle or locate a telephone. Third, using the direct communication saves time over the other two methods, as the information is transmitted in real-time while the delivery personnel are 'on-the-go' and performing other tasks. Because of these advantages, it is preferred that package tracking data is communicated to the mainframe data repository **29** via the packet radio, and that the other forms of updating the mainframe data repository **29** are used only when attempts to update the mainframe data repository **16** using the packet data radio are unsuccessful.

The three communication methods discussed above for transmitting package tracking data to the mainframe data repository **16** are exclusive of each other; therefore, although all package tracking data received in the data acquisition device **15** for a given period (e.g., one day, one delivery route, etc.) is stored within the data acquisition device **15,** the package tracking data is only communicated to the mainframe data repository **29** once using one of the three communication methods discussed above. To prevent data from being transmitted to the mainframe data repository **16** more than once, which wastes valuable system resources, after each successful transmission of package tracking data the data successfully transmitted is marked in memory of the data acquisition device **15** as having been successfully transmitted so that no addition attempts to transmit the package tracking data are made. The mark may include one data element associated with a specific delivery or pickup record corresponding to one transaction or package.

For instance, when package tracking data is transmitted from the data acquisition device **15** directly to the mainframe data repository **16** using the device's packet data radio, the data is marked after a receipt transmission from the mainframe data repository **16** that the data was accurately received. Thereafter, when the data acquisition device **15** is inserted into the DVA, the package tracking data previously transmitted via the packet data radio is not communicated to the DVA for forwarding via communication link **14** to the mainframe data repository. Likewise, for instance, where package tracking data cannot be transmitted effectively to the mainframe data repository **29** via the packet data radio, the package tracking data stored in the data acquisition device remains unaltered.

Thus, when the data acquisition device is inserted into the DVA, the package tracking data is transmitted to the DVA for transmission to the mainframe data repository **16.** After acknowledgment from the mainframe data repository **16** that the package tracking data was received, the DVA communicates with the data acquisition device **15** to identify that the package tracking data has been effectively transmitted to the mainframe data repository **16.** The third method of communicating with the mainframe data repository **16,** via the a conventional telephone **18,** is typically used only if the direct communication link or indirect communication link via the delivery vehicle **17** and DVA are ineffective. Where the DVA is ineffective at transmitting the package tracking data, one or more messages may be presented to the delivery personnel via an audio, visual, textual, or graphical message on the data acquisition device **15** or DVA that the delivery personnel should locate a telephone and transmit the data to the mainframe data repository via the telephone **18.**

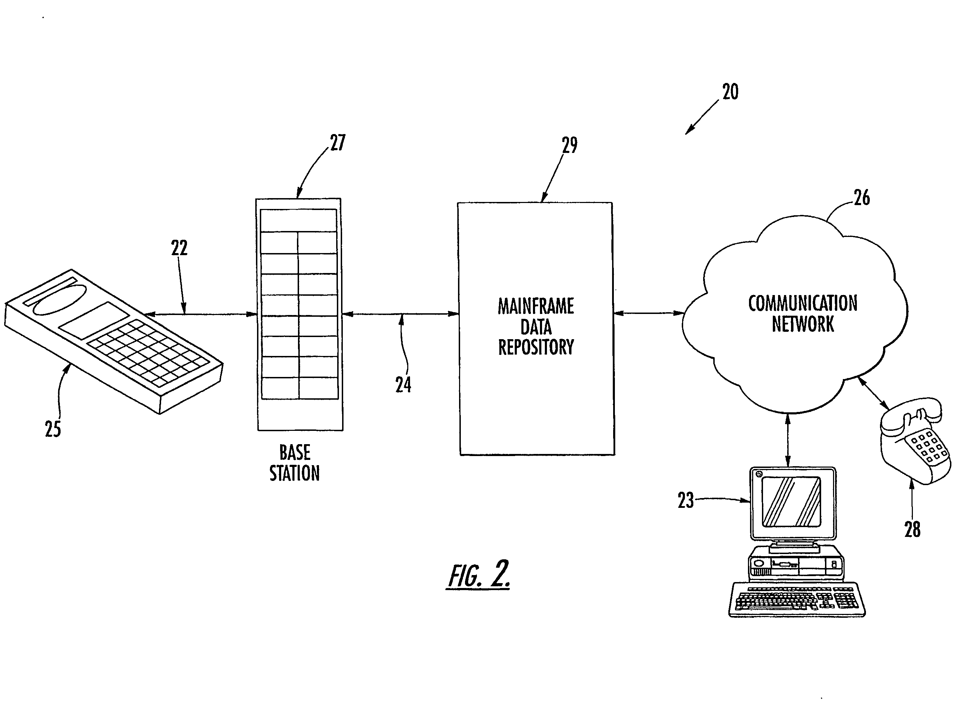

After all package tracking data for one day, or for one delivery period, is communicated via one of the three methods described above, the data acquisition device **15** is returned to a delivery hub location, typically a hub location associated with a delivery vehicle or delivery personnel associated with the data acquisition device. FIG. 2 is a block diagram of a system **20** according to the present invention through which package tracking data is download from a data acquisition device **25** to a base station **27** over a first communication link **22,** and further downloaded **24** from the base station **27** to the mainframe data repository **29** over a second communication link **24.** The communication links may represent the Internet, a LAN, WAN, or the like, and are preferably high speed connections enabling the download of data from multiple data acquisition devices simultaneously to the mainframe data repository **29.** The purpose of the download of package tracking information is to ensure that package tracking data received during the delivery period is accurately represented in the mainframe data repository **29.** This data includes package tracking data associated with packages delivered and packages picked up by delivery personnel. According to one aspect of the present invention, the download of information replaces all data previously communicated from the data acquisition device to the mainframe data repository, as discussed in detail with reference to FIG. 1, above. Therefore, package tracking data downloaded via the three communication methods of FIG. 1 is used for real-time tracking of packages. On the other hand, any inquiries by customers or customer service personnel subsequent to the docking and download of package tracking data to the base station **27** and mainframe data repository **29** utilizes only the information directly provided by the data acquisition device to the base station. As in FIG. 1, customers or customer service representatives can access the mainframe data repository **29** using one or more computers **23** or telephones in communication with the mainframe data repository **29** via a communications network **26.**

According to one aspect of the invention, some package tracking information downloaded to the mainframe data repository **29** via the base station **27** may not have been previously forwarded to the mainframe data repository **29** prior to the data acquisition device's **25** docking with the base station **27.** For instance, data requiring substantial bandwidth, but not crucial to the immediate tracking of packages, may not be transmitted via the three methods of communication illustrated in FIG. 1 in an attempt to minimize wireless data transmission time. Minimizing wireless data transmission time eliminates unnecessary wireless transmission costs and reduces wireless transmission errors that could otherwise result where lengthy wireless data transmissions are made. Package tracking data typically communicated via the three modes of communication of FIG. 1. include a package identification or barcode number, the name of the recipient, date, and data indicative of the package's location, such as whether the package has reached its ultimate destination. Additional package tracking data can include, but is not limited to, package weight, the number of packages shipped as part of a complete group of items shipped, the receipt of payment, recipient or shipper signature (as described in detail below), date of pickup or delivery, address of recipient or shipper, and the like, as well as data necessary for the carrier to identify and track the package, as is well known in the art.

Because the download of package tracking data over communications links **22, 24** is typically over a high speed connection, and may be used by the system **20** for an accurate and historical package tracking log, all package tracking data stored within the data acquisition device **25** is downloaded to the mainframe data repository **29** via the base station **27.** For instance, digital signatures received at a point of delivery and/or pickup may be included in complete download of package tracking data from the data acquisition device **25** to the base station **27,** and from the base station **27** to the mainframe data repository **29,** even if such information is not downloaded via the packet data radio, DVA, or telephone and acoustical modem, as in FIG. 1. Because package tracking data maintained in the data acquisition device **25** is held to be more accurate than wireless data transmitted to the mainframe data repository **29** from the data acquisition device **25,** the download of data via the base station replaces, or trumps, previously stored data. Although the system **20** may only download new data, or package tracking data from which there is a synchronization error with previously collected package tracking data, such an implementation is less preferable because comparisons would be required and any attempts to determine conflicts may result in less reliable package tracking data records.

It should also be appreciated that the base station **27** may also provide one or more functions unrelated to the download of package data, such as recharging data acquisition devices **25** or updating software from the data acquisition device **25.** After downloading to the base station **27** is complete, the base station **27** may reset or clear from memory the package tracking data such that new data relating to additional packages to be delivered may be downloaded onto the data acquisition device **25.** For example, bar code information for packages to be shipped next time the data acquisition device **25** is in use may be downloaded to the data acquisition device **25** from the base station **27.**

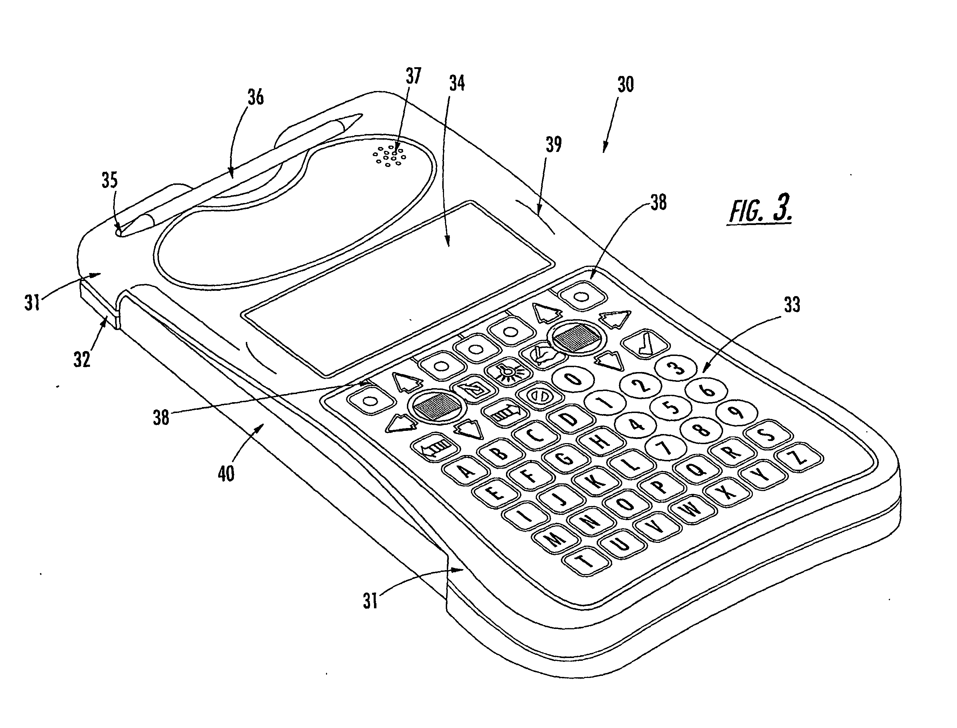

FIG. 3 shows a data acquisition device **30** of the present invention, according to one embodiment of the invention. The structure of the device **30** includes an upper case **31** and a lower case **32,** which are preferably constructed of a hard plastic or similar material that provides durability and strength while remaining relatively lightweight. As illustrated in FIG. 3, the upper case **31** of the device **30** includes a keypad **33,** screen **34,** speaker **37,** and stylus holder **35** into which a stylus (or pen) may be removably affixed. Also included in the data acquisition device **30** is a handle **40** and a pair of nubs **39** projecting up on each side of the screen **34** to protect the device from a fall directly on its front surface. Additionally, rubber strips (not illustrated) may be included which extend along each contoured side of the device **30.**

According to one aspect of the invention, the keypad **33,** screen **34** and speaker **37** are inset into one or more openings of the upper case **31** such that the keypad **33,** screen **34** and speaker **37** may be in contact or communication with one or more elements located within the device. The keypad **33** includes one or more hard keys, such as numbers letters, and symbols (e.g., a bar code or backlight graphic), and soft keys **38,** which vary their functions. The keypad enables delivery personnel to input virtually any type of data associated with a package, including a recipient's name and address. The functions associated with each softkey **38** are represented on the screen **34** relative to the softkey's location on the keypad **33.** For instance, one or more visible lines **41** extend from the softkeys to locations on the screen **34** at which functions associated with the softkeys **38** are presented.

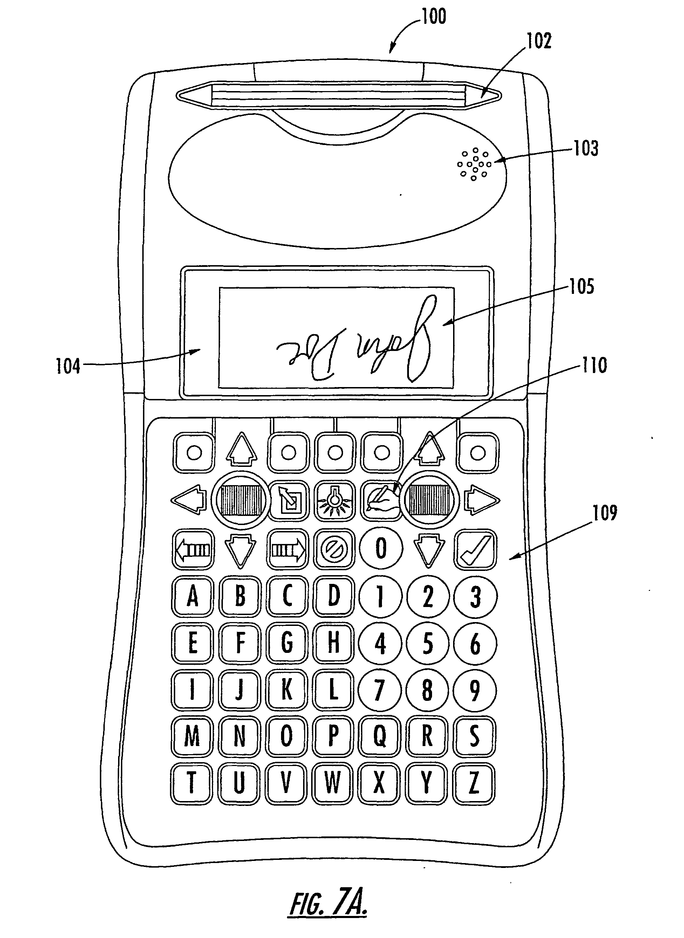

According to one aspect of the present invention, the screen **34** is a multilayered touch screen incorporating both LCD and signature capture capability so that the touch screen can receive signatures entered using a stylus. Additionally, the screen **34** includes a signature reproducing capability such that a signature is digitally reproduced on the screen under the stylus **36** during execution of the signature using the stylus **36.** These functions are discussed in greater detail with respect to FIGs. 6-8, below.

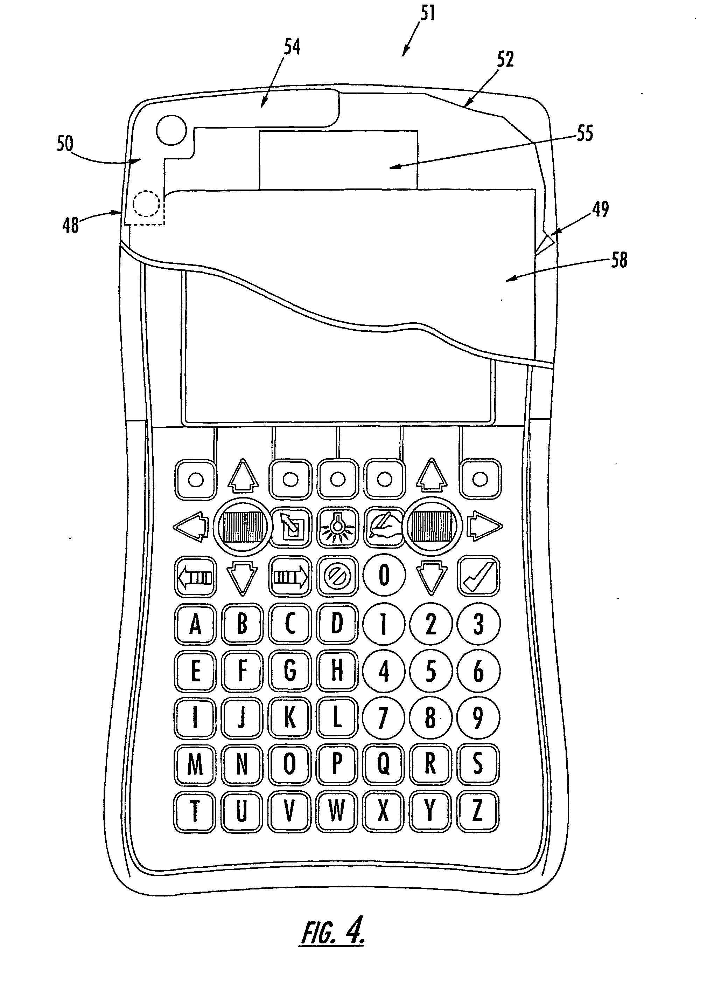

FIG. 4 shows a top view of a data acquisition device **51** of the present invention, including a cutaway view showing a strip line packet data radio network antenna **50** located at the top of the data acquisition device **51,** according to one embodiment of the present invention. As previously discussed with reference to FIG. 1, the radio network antenna **50** facilitates the communication of the data acquisition device radio with the mainframe data repository **16** such that package tracking data can be wirelessly transmitted to the mainframe data repository **16.** The antenna also allows the data acquisition device to receive communications, from the mainframe data repository, or from another location associated with the data acquisition device, such as a hub location where the data acquisition device resides when not in use. Therefore, the packet data radio and antenna **50** enable two-way messaging between the data acquisition device and remote locations associated with the data acquisition device. The two way function allows up-to-the-minute information to pass in both directions, such that the driver can receive real-time delivery instructions (e.g., a rush pickup that is to be picked up) while at the same time transmitting real-time package tracking information to the mainframe data repository.

The antenna **50** is located wholly within the upper and lower case of the data acquisition device **51,** such that no part of the antenna **50** protrudes from the smooth contoured edges formed by the upper and lower cases of the data acquisition device **51.** This provides a significant benefit over conventional antennas, as the data acquisition device will likely endure environments in which the device may be dropped or jarred on a daily basis. However, because the antenna is wholly contained within the case, no protruding element is required in the case, which may get cracked or broken if the device were dropped. As illustrated, the antenna **50** is generally located above the bar code scanner **55** and the touch screen components **58.** The antenna **50** includes a flat metal strip **52** embedded within a foam member **54.** The primary purpose of the foam member **54** is to protect the integrity of the strip line antenna **50** were the data acquisition device **51** to be dropped. As illustrated, the flat metal strip **52** spans the entire width of the data acquisition device **51.** Another metal strip **56** is laminated to a surface of the foam member **54** and is connected at a corner **57** to the strip **52** by a conductor (not shown). The strips **52** and **56** and foam member **54** are specially shaped to maximize the omni-directional capability of the antenna **50** and the antenna gain. By providing a lengthy antenna having strips at multiple orientations, sufficient antenna gain may be produced regardless of the orientation of the data acquisition device **51.**

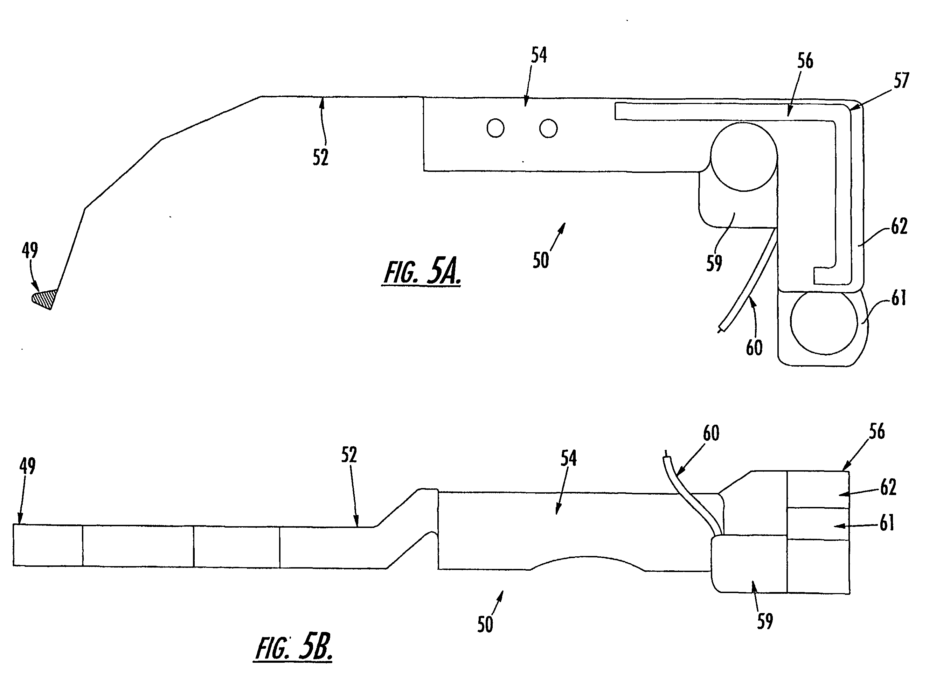

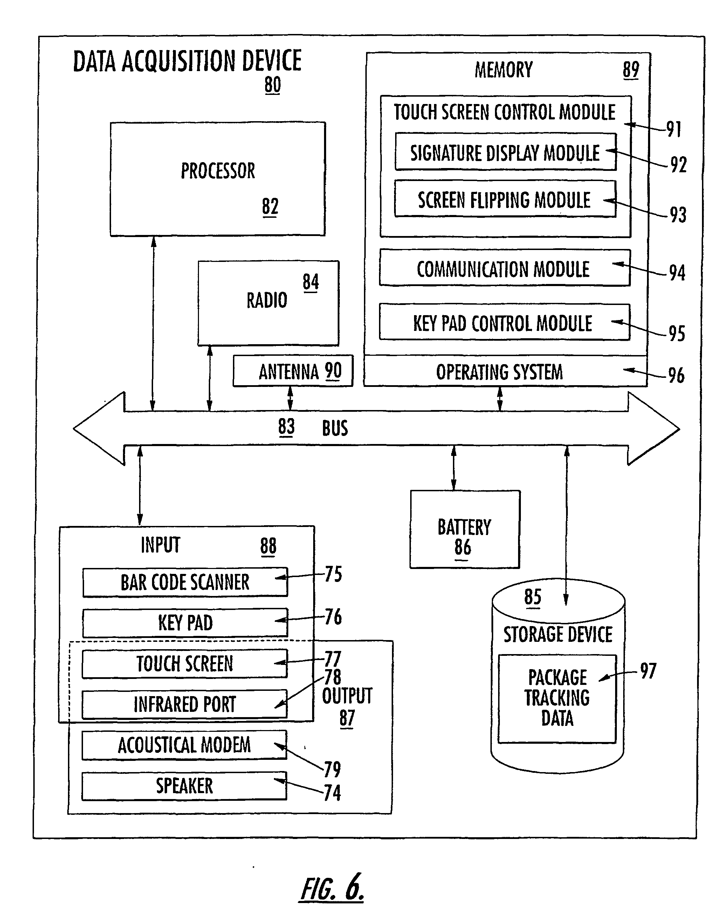

FIG. 5A shows a rear view perspective of the packet data radio antenna **50** of FIG. 4, according to one aspect of the present invention. As shown, the flat metal strip **52** includes a plurality of straight segments, wherein each segment is oriented at an angle with respect to each other segment. Additionally, segments located further from the foam member **54** are at increasing angles with respect to the lengthwise portion of the foam member adjacent the top of the data acquisition device **51.** Over the length of the segments, the flat metal strip turns approximately 90 degrees. According to one aspect of the invention, the segments of the flat metal strip **52** include widthwise portions perpendicular to the length of the strip **52** (see FIG. 5B) at least 0.75 centimeters long, and preferably 1 centimeter in length. As is also illustrated in FIGs. 4 and 5A, the flat metal strip **52** includes at least one lengthwise portion oriented at least 90 degrees from at least one other lengthwise portion of the second metal strip. The far end **49** of the antenna **50** may be mounted to touch screen components **58,** generally opposite the first end **48** of the antenna **50,** which is also preferably affixed to the touch screen components **58.** As shown in FIG. 5A, the antenna **50** includes a coaxial line **60** emanating from the foam member **54** on the upper inside corner of the antenna **50.** This coaxial line attaches on one end to the flat metal strip **52** at the corner **57** of the antenna **50,** and at the other end to the packet data radio (not illustrated).

FIG. 5B shows a bottom view perspective of the packet data radio antenna of FIG. 4, according to one aspect of the present invention. The bottom view perspective illustrates the differing thickness of foam member portions **59, 61, 62.** Specifically, the first end **48** of the flat metal strip extends underneath foam member portion **61,** as illustrated in FIG. 5A, such that the metal strip **52** is generally located in the center of the foam member **54.** The first end **48** includes a hole identical to the hole in foam member portion **61** such that the foam and first end may be mounted to touch screen components **58.** As illustrated in FIG. 5A, the foam member portion **62** is located above foam member portion **61** such that the metal strip **56** laminated to the surface of the foam member **54** is separated from the flat metal strip by the thickness of foam member portions **61** and **62.**

The remaining components of the data acquisition device will be described next with reference to FIG. 6, with particular emphasis on the screen of the data acquisition device, and the screen's capabilities to receive, represent, and flip signatures. As will be appreciated by one skilled in the art, the data acquisition device may take the form of an entirely hardware embodiment, although it is preferred that the device will combining software and hardware aspects. Furthermore, the present invention may take the form of a computer program product on a computer-readable storage medium having computer-readable program code means embodied in the storage medium. Any suitable computer-readable storage medium may be utilized including hard disks, removable disks, CD-ROMs, optical storage devices, or magnetic storage devices.

The present invention is described below with reference to block diagrams and flowchart illustrations of methods, apparatuses and computer program products according to an embodiment of the invention. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

FIG. 6 shows a block diagram of the components of the data acquisition device **80.** As illustrated, the data acquisition device **80** generally includes a radio **88,** processor **82,** storage device **85,** memory **89,** antenna **90,** bus **83,** input and output devices **88, 87,** and battery **86.** The memory **89** includes an operating system **96** and a touch screen control module **91,** communication module **94,** and key pad control module **95.** Furthermore, the touch screen control module includes a signature display module **92** and a screen flipping module **93.** It will be appreciated by those of ordinary skill in the art that the modules **91, 92, 93, 94, 95** within the memory **89** may be embodied in computer software residing in the memory **89,** which runs with assistance from the operating system **96** and the processor **82.** The processor **82** and modules **91, 92, 93, 94, 95** communicate with each other, and with other elements within the data acquisition device **80** via a system interface or bus **83.**

The storage device **85** represents at least one storage device, such as a hard disk drive, a floppy disk drive, a CD Rom drive, or optical disk drive, for storing information on various computer-readable media, such as a hard disk, a removable magnetic disk, or a CD-ROM disk. As will be appreciated by one of ordinary skill in the art, the at least one storage device **85** is connected to the system bus **83** by an appropriate interface. The storage device **85** and their associated computer-readable media provide nonvolatile storage for the data acquisition device **80.** It is important to note that the computer-readable media could be replaced by any other type of computer-readable media known in the art. Such media may include, for example, magnetic cassettes, flash memory cards, digital video disks, and Bernoulli cartridges. As illustrated, a primary function of the storage device **85** is to store package tracking data **97** received by the data acquisition device **80.** The package tracking data is typically received from one or more input devices **88.**

The input devices **88** of the data acquisition device **80** include the bar code scanner **75,** key pad **76,** touch screen **77** and infrared communication element **78.** It should be appreciated that at least two of these elements, the touch screen **77** and infrared port **78,** also function as output devices **87.** Therefore, the output devices **87** include the acoustical modem **79,** speaker **74,** touch screen **77,** and infrared port **78.** Additionally, although not included in the input or output devices **88, 89,** the radio **84** acts as an input and output device with the aid of the antenna **90,** although the items are drawn separately in the block diagram of FIG. 6. Furthermore, one or more additional input/output elements not illustrated may also be included in the data acquisition device, or may be added to the device via a communications port (not illustrated). For instance, a printer, credit card reader, or the like, may be added to the data acquisition device **80** via a communications port in communication with the processor via the bus **83.**

Referring again to the memory **89** components, the key pad control module **95** controls the function of the softkeys and the functions that occur when a key is depressed. For example, when a driver pushes a bar code key on the key pad **76,** the key pad control module **95** instructs the bar code scanner **75** to scan an item. As another illustrative example, the key pad control module **95** instructs the touch screen **77** to display characters entered via the key pad **76,** or instructs the data acquisition device to store package tracking data **97** in the storage device **85** after the delivery personnel has concluded a transaction by pressing one or more keys on the key pad **76.** Therefore, the key pad control module controls the user's interaction with the data acquisition device. The communication module **94** facilitates the data acquisition device's communication with other components and communication networks via radio **84** and antenna **90,** bar code scanner **75,** infrared communication element **78,** acoustical modem **79,** and touch screen **77.** Therefore, the communication module interprets messages received by any input elements **88** and radio **84,** and facilitates the communication of the data acquisition device with external components using one or more output devices. For instance, after receipt of acknowledgement that data has been successfully transmitted to the mainframe data repository, the communication module **94,** with the aid of the processor, will instruct the storage device **85** to mark the successfully transmitted package tracking data **97** as having been sent and received by the data acquisition device **80** so that the device does not attempt to retransmit the package tracking data.

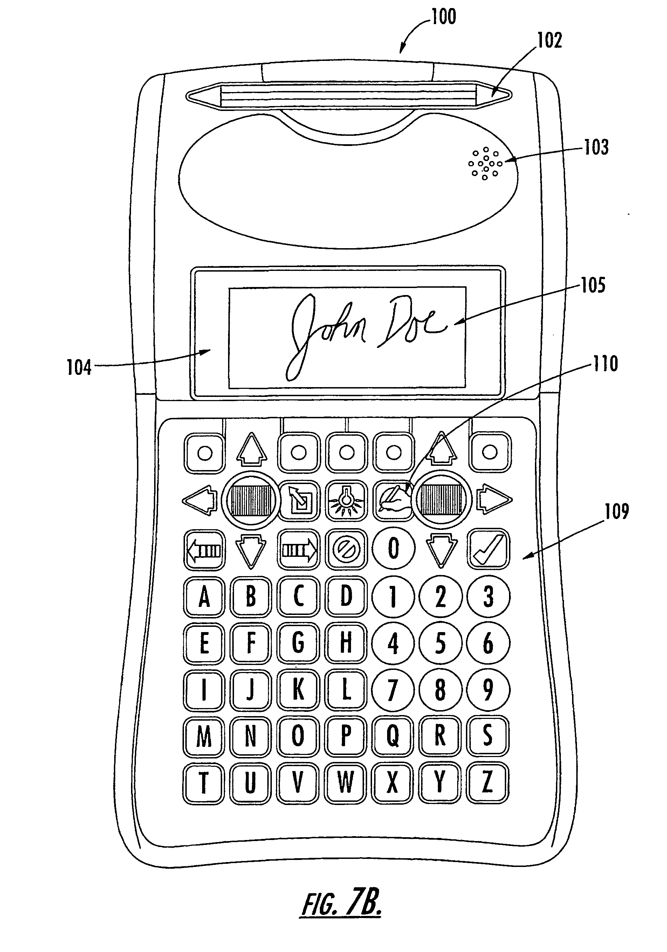

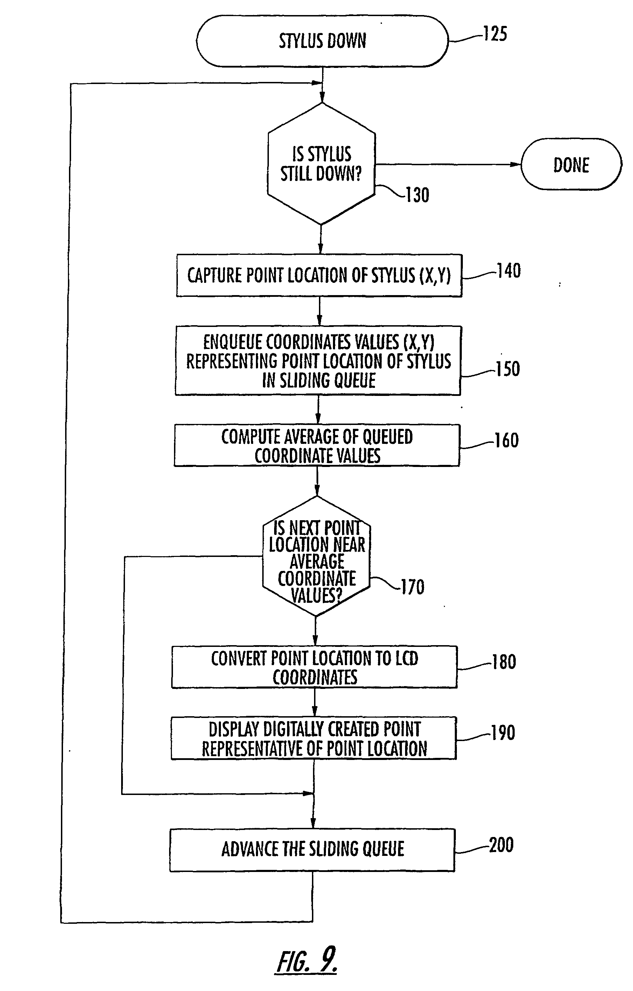

The touch screen control module **91** controls the receipt and display of data input using the touch screen **77.** The touch screen control module includes a signature display module, which is a software algorithm which enables the accurate display of a signature while the signature is executed on the touch screen using the stylus. The function of the signature display module **92** are described in detail with reference to the flow chart of FIG. 9, below. The screen flipping module **93** is a software algorithm, in communication with the touch screen **77,** which alters the output of the touch screen such that it may be inverted, and thus easily viewed from either end of the data acquisition device. For instance, the screen may be inverted so that data may be viewed by a person standing opposite and facing the package delivery personnel as the delivery personnel holds the data acquisition device. According to another aspect of the invention, the touch screen **77** can receive input, such as a customer signature, in one orientation and slip or reorient the signature 180 degrees for viewing by the package delivery personnel holding the data acquisition device. The function of the screen flipping module is described in detail with reference to FIGs. 7A and 7B.

It will be appreciated by one of ordinary skill in the art that one or more of the memory modules **91, 92, 93, 94, 95** may be combined, and additional components well known to those of skill in the art performing functions described herein may be included in the memory **89.** Additionally, one or more functions of the memory modules may be included in one or more other non-memory components of the data acquisition device **80.** As an illustrative example, bar code scanner **75** instructions may reside at the bar code scanner **75** instead of at the communication module **94.** Therefore, the block diagram of FIG. 6 is intended as only one embodiment of the data acquisition device **80,** and is not intended to represent the sole embodiment of the data acquisition device **80.**

FIG. 7A shows a top view of the data acquisition device **100,** immediately after receipt of a customer signature **105** on the touch screen display **104.** As illustrated, the customer signature is received at the touch screen **104** through pressure applied by the stylus on the touch screen **104** as a signature is executed. After receiving the signature **105,** the data acquisition may flip or invert the customer signature **106,** as illustrated in FIG. 7B. According to one aspect of the invention, inverting a customer signature is part of the overall design concept of the data acquisition device of the present invention. However, it should be appreciated that the data acquisition device **100** may be implemented without a signature flipping capability. More importantly, it should be appreciated that the screen flipping module **93,** which performs the flipping of data displayed on the screen **104,** may flip any data displayed on the screen **104,** or may be implemented independent of the data acquisition device **100.** Therefore, the screen flipping module **93** may be incorporated into handheld devices, signature capture devices, and the like, to flip the display of data generated by or input into a device having such functionality.

Referring again to the illustrative embodiment of FIG. 7A, after entering all of the delivery stop/package information, the driver may press a signature key **110** on the keypad **109,** which results in the screen displaying the number of packages that have been entered for the stop. After the driver verifies this data is by hitting one or more keys, such as an 'Enter' key, the data acquisition device **100** enters into a Signature Mode. In the Signature Mode the data acquisition device **100** flips the screen **104** so that it can be read from the top end of the data acquisition device (customer orientation) while the driver is holding the data acquisition device **100.** A signature box is displayed for the customer to sign in. According to one aspect of the invention, the screen **104** also presents instructions to the customer, such as instructions identifying the location in which the customer should sign. According to another aspect of the invention, the screen **104** may present additional package data which may be verified by the customer, who can read the package data because it is oriented towards the customer such that the customer can easily review the data.

During execution of the signature a customer typically rests their hand on the hand rest **103** incorporated into the data acquisition device **103** directly adjacent to the touch screen **104.** The signature appears inverted in FIG. 7A because the package delivery personnel retains the data acquisition device during the execution of the customer signature, and the customer executes their signature as they face the package delivery personnel. In this way, the package delivery personnel does not relinquish control of the data acquisition device **100** to the customer in order to obtain the signature of the customer. Therefore, the driver can face the keypad **109** of the data acquisition device **100** at all times. Once the customer has finished signing, the driver may again press the Signature Key **110** such that the screen including the text and executed signature is flipped back, as shown in FIG. 7B, for the driver to view. The driver may then enter the customer's name in text using the keypad **109.** FIG. 7B shows a top view of the data acquisition device **100,** from the same perspective as FIG. 7A, including an inverted representation of the customer signature shown in FIG. 7A. As previously indicated, the screen flipping module **93** within the data acquisition device **100** performs the vertical flipping of the screen **105** such that the digitally reproduced signature is inverted with respect to the signature digitally reproduced on the screen after execution of the signature.

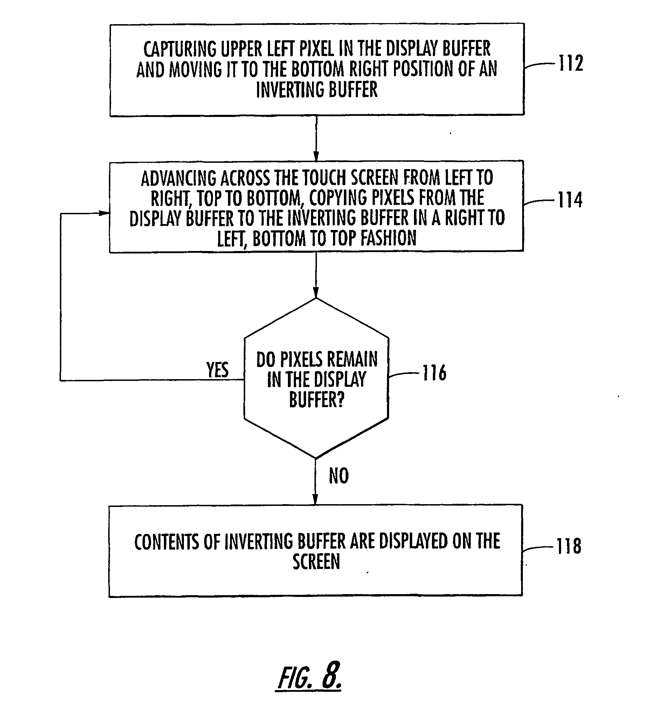

The screen flipping module **93** uses a straightforward graphics flipping algorithm. FIG. 8 shows a flow chart illustrating the process by which the data acquisition device screen is inverted using the graphics flipping algorithm, according to one aspect of the invention. Because the touch screen **104** is a series of pixels, stored within a display buffer associated with the touch screen and located in memory **89,** the signature flipping algorithm executes the flip of the screen-presented data by taking the upper left pixel in the display buffer and moving it to the bottom right position of an inverting buffer (block **112**). The inverting buffer may also be maintained in the memory **89,** and more specifically, within the screen flipping module **93.** The purpose of the inverting buffer is to store touch screen pixels that are moved commensurate with the production of a screen oriented at 180 degrees from the screen represented by pixels stored within the display buffer. It should be appreciated that although the inverting buffer is preferably included within the screen flipping module **93,** it may alternatively be located at the touch screen **77** or in the storage device **85.**

The screen flipping module **93** advances across the touch screen **104** from left to right, top to bottom, copying pixels from the display buffer to the inverting buffer in a right to left, bottom to top orientation (block **113**). Therefore, where the screen comprises L*H pixels, where L represents the number of pixels spanning the length of the screen and H represents the number of pixels spanning the height of the screen, a pixel in the display buffer at screen location $L_I, H_I$, representing the upper leftmost pixel in the screen, will be placed in the inverting buffer as a pixel at location $L_L, H_H$, the lower rightmost pixel in the screen. For instance, a pixel in the display buffer at screen location $L_5, H_8$, will be placed in the inverting buffer as a pixel at screen location $L_{L-5}$, $H_{H-8}$. Therefore, pixels comprising a horizontal line in the center of the screen **104** are remain in the center of the screen, albeit flipped horizontally, and pixels comprising a vertical line in the center of the screen **104** remain in the center of the screen **104,** albeit flipped vertically. After completing the copying of pixels from the display buffer to the inverting buffer in this manner (block **116**), the contents of the inverting buffer are displayed (block **118**). It will also be appreciated that the reverse process of that described in FIG. 8 may also be used to invert the screen a second time.

FIG. 9 is a flow diagram illustrating the signature imaging algorithm of the present invention executed by the signature display module **92.** The purpose of the signature imaging algorithm is to illustrate a digital representation of a customer's signature on the screen **104** during the execution of the signature. Although the signature imaging algorithm of the present invention as discussed herein refers to illustrating a signature during execution of the signature, it should be appreciated that the algorithm may be used to illustrate any input received from the stylus while the stylus is pressed against the touch screen **104.**

Referring to FIG. 9, when a user begins writing on the screen 14 with the stylus **16,** the "pen down" state is detected at step **120.** While the stylus is still down, as tested at step **130,** a conventional digitizer circuit located within the touch screen control module **91** or touch screen **77** captures the (x,y) coordinates of the point of contact at step **140.** The point location of the stylus is determined by the application of pressure from the stylus on the LCD touch screen when the stylus is pressed against the LCD touch screen. At step **150,** a queue of 10 points is stored in a sliding queue before any display on the LCD screen. Although a queue of 10 points is preferred, it will be appreciated that any number of points may be used as an average threshold value that must be met before a digitally created point is displayed on the LCD touch screen. After 10 points are in the queue, at step **160** the average of the queued coordinates is computed. If the next point captured is within a predetermined tolerance of the average, as tested at step **170,** then at step **180** the point is converted from digitizer coordinates to LCD coordinates. The formula for the conversion from digitizer coordinates to LCD coordinates uses a multiplier against the numerator to limit the impact of rounding error.

The formula is as follows:

$$\text{LCD POINT} = \frac{(100 \times \text{digitizer point})}{((100 \times \text{digitizer range})/\text{LCD range})}$$

The digitizer and LCD ranges depend on the particular devices, for example 0-1024 for the digitizer range, and 0-330 pixels for the LCD range. This conversion is not required where the digitizer and LCD range are equal, but is otherwise preferred to create a digital image indicative of the movement of the stylus on the touch screen. After this conversion, the point is displayed on the LCD at step **190.** The sliding queue is thereafter advanced at step **200** by dropping the first-acquired point in the queue, and the process returns to step **130.** If the pen is still down, a new point is captured and added to the queue, and the foregoing steps are repeated.

If, however, at step **170** the point is not close enough to the average, the point is not displayed. The process then continues to step **200** for advancement of the queue and testing of the next point. This process solves the problem of variations in the pressure exerted by the person signing which can create spurious voltages leading to a poor image of the signature or poor accuracy in reproducing the track of the stylus. Therefore, when a person lifts a stylus, the release of pressure will not be misinterpreted as a written line, as occurs in many conventional signature capture devices.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A package tracking system (10), comprising:

   a portable data acquisition device (15, 25, 30, 80) capable of collecting and storing package data, wherein the data acquisition device (80) includes at least one data input device (88);
   a docking device including data storage, wherein the data acquisition device (80) is associated with the docking device, wherein the data acquisition device (80) is adapted to communicate with the docking device via an infrared communications port (78), and wherein the data acquisition device (80) is adapted to transmit collected and stored package data from the data acquisition device (80) to the docking device; and
   a remote mainframe data repository (16), wherein the remote mainframe data repository (16) is capable of receiving collected and stored package data from the data acquisition device (80) and from the docking device, and wherein the remote mainframe data repository (16) maintains a package database adapted to include the collected and stored package data, the system being **characterised in that** said data acquisition device includes a wireless radio (84), the docking device includes a communications radio, and the remote mainframe data depository (16) is capable of receiving data directly from said wireless radio (84) and from said communications radio.

2. The package tracking system of claim 1, wherein the at least one data input device (88) comprises a touch screen (77).

3. The package tracking system of claim 2, wherein the touch screen (77) comprises a signature capture element capable of receiving signatures input using a stylus.

4. The package tracking system of claim 2 or claim 3, wherein the touch screen (77) is capable of illustrating a signature during execution of the signature.

5. The data acquisition device of claim 4, wherein the screen is adapted to digitally reproduce a signature on the screen (77) during execution of the signature.

6. The package tracking system of claim 4 or claim 5, wherein the touch screen (77) is capable of inverting the signature after the execution of the signature is complete.

7. The data acquisition device of claim 6, further comprising a signature flipping element (93), wherein the signature flipping element (93) flips a digitally reproduced signature vertically such that the digitally reproduced signature is inverted with respect to the signature digitally reproduced on the screen after execution of the signature.

8. The package tracking system of any of claims 2-7, wherein the touch screen (77) comprises an LCD display.

9. The data acquisition device of claim 8, wherein the touch screen has both LCD and signature capture capability, whereby the touch screen is adapted to receive signatures entered using a stylus.

10. The package tracking system of any preceding claim, wherein the docking device is adapted for location in a delivery vehicle.

11. The package tracking system of any preceding claim, further comprising a packet data radio network for transmitting communications directly from the data acquisition device (80) to the mainframe data repository (16).

12. The package tracking system of any preceding claim, wherein the wireless radio (84) is a two-way radio through which the data acquisition device (80) can directly receive wireless communications from the mainframe data repository (16).

13. The package tracking system of any preceding claim wherein the at least one data input device comprises a keyboard (76) comprising a plurality of keys, and wherein at least one of the plurality of keys has a plurality of functions associated therewith.

14. The package tracking system of claim 13, wherein the data acquisition device (80) includes a touch screen (77), and wherein at least one function of the plurality of functions corresponding to the at least one of the plurality of keys is displayed on the touch screen.

15. The package tracking system of any preceding claim, further comprising a base station to which the data acquisition device (80) may be docked for communicating package data to the mainframe data repository (16).

16. The package tracking system of claim 15, wherein the base station is adapted for communication with the mainframe data repository (16) via a cellular communications network.

17. The package tracking system of any preceding claim, wherein the data acquisition device (80) includes a memory (85), adapted to store the collected package data, and wherein the collected data transmitted directly from the data acquisition device (80) to the mainframe data repository (16) is distinguishable from collected data not directly transmitted to the mainframe data repository (16).

18. The data acquisition device of any preceding claim, wherein the package data comprises a digitized customer signature.

19. The data acquisition device of any preceding claim, wherein the package data comprises data representing the completion of a package delivery.

20. The data acquisition device of any preceding claim, wherein the package data comprises data representing the identity of a package.

21. The date acquisition device of any preceding claim, wherein the at least one data input device (88) is a bar code scanner (75).

22. A method of tracking package data using a wireless data acquisition device (15,25,30,80) and transmission system, the method comprising the step of:

   using the data acquisition device (80) to collect and store package tacking data;
   and being **characterised by** the further steps of:

   transmitting at least some of the collected and stored package tracking data directly to a remote mainframe data repository (16) via a wireless radio (84) of the data acquisition device (80) or via a communications radio of a docking device for the data acquisition device (80); and
   maintaining an accessible package tracking database in the remote mainframe data repository (16) based on the transmitted collected and stored package tracking data, wherein the package tracking database stores the transmitted collected and stores package tracking data received by the remote mainframe data repository (16).

23. The method of claim 22, wherein the data acquisition device comprises a touch screen and the method includes the steps of receiving a signature input on said screen using a stylus, and capturing said signature as data.

24. The method of claim 23, and including the step of illustrating said signature as the screen during execution thereof.

25. The method of claim 23 or claim 24 and including the step of flipping said signature through 180° on said screen.

**Patentansprüche**

1. Paketverfolgungssystem (10), das folgendes umfasst:

    eine tragbare Datenerfassungseinrichtung (15, 25, 30, 80), die in der Lage ist, Paketdaten zu sammeln und zu speichern, wobei die Datenerfassungseinrichtung (80) mindestens eine Dateneingabeeinrichtung (88) enthält;

    eine Dockingeinrichtung, die Datenspeicherung enthält, wobei die Datenerfassungseinrichtung (80) der Dockingeinrichtung zugeordnet ist, wobei die Datenerfassungseinrichtung (80) dafür ausgelegt ist, über einen Infrarotkommunikationsport (78) mit der Dockingeinrichtung zu kommunizieren und wobei die Datenerfassungseinrichtung (80) dafür ausgelegt ist, gesammelte gespeicherte Paketdaten von der Datenerfassungseinrichtung (80) zu der Dockingeinrichtung zu übertragen; und

    ein entferntes Mainframe-Datendepot (16), wobei das entfernte Mainframe-Datendepot (16) in der Lage ist, gesammelte und gespeicherte Paketdaten von der Datenerfassungseinrichtung (80) und von der Dockingeinrichtung zu empfangen und wobei das entfernte Mainframe-Datendepot (16) eine Paketdatenbank pflegt, die dafür ausgelegt ist, die gesammelten gespeicherten Paketdaten zu enthalten, wobei das System **dadurch gekennzeichnet ist, dass** die Datenerfassungseinrichtung ein drahtloses Funkgerät (84) enthält, die Dockingeinrichtung ein Kommunikationsfunkgerät enthält und das entfernte Mainframe-Datendepot (16) in der Lage ist, Daten direkt von dem drahtlosen Funkgerät (84) und von dem Kommunikationsfunkgerät zu empfangen.

2. Paketverfolgungssystem nach Anspruch 1, wobei die mindestens eine Dateneingabeeinrichtung (88) einen Berührungsschirm (77) umfasst.

3. Paketverfolgungssystem nach Anspruch 2, wobei der Berührungsschirm (77) ein Unterschriftserfassungselement umfasst, das in der Lage ist, unter Verwendung eines Stifts eingegebene Unterschriften zu empfangen.

4. Paketverfolgungssystem nach Anspruch 2 oder 3, wobei der Berührungsschirm (77) in der Lage ist, während der Ausführung einer Unterschrift die Unterschrift darzustellen.

5. Datenerfassungseinrichtung nach Anspruch 4, wobei der Schirm dafür ausgelegt ist, während der Ausführung der Unterschrift die Unterschrift auf dem Schirm (77) digital zu reproduzieren.

6. Paketverfolgungssystem nach Anspruch 4 oder 5, wobei der Berührungsschirm (77) in der Lage ist, die Unterschrift zu invertieren, nachdem die Ausführung der Unterschrift abgeschlossen ist.

7. Datenerfassungseinrichtung nach Anspruch 6, weiterhin mit einem Unterschriftenumklappelement (93), wobei das Unterschriftenumklappelement (93) eine digitalreproduzierte Unterschrift vertikal derart umklappt, dass die digital reproduzierte Unterschrift bezüglich der digital auf dem Schirm reproduzierten Unterschrift nach der Ausführung der Unterschrift invertiert ist.

8. Paketverfolgungssystem nach einem der Ansprüche 2-7, wobei der Berührungsschirm (77) ein LCD-Display umfasst.

9. Datenerfassungseinrichtung nach Anspruch 8, wobei der Berührungsschirm sowohl LCD- als auch Unterschriftenerfassungskapazität aufweist, wodurch der Berührungsschirm dafür ausgelegt ist, unter Verwendung eines Stifts eingegebene Unterschriften zu empfangen.

10. Paketverfolgungssystem nach einem der vorhergehenden Ansprüche, wobei die Dockingeinrichtung für eine Anordnung in einem Lieferfahrzeug ausgelegt ist.

11. Paketverfolgungssystem nach einem der vorhergehenden Ansprüche, weiterhin mit einem Paketdatenfunknetz zum Übertragen von Kommunikationen direkt von der Datenerfassungseinrichtung (80) zu dem Mainframe-Datendepot (16).

12. Paketverfolgungssystem nach einem der vorhergehenden Ansprüche, wobei das drahtlose Funkgerät (84) ein Zweiwegefunkgerät ist, über das die Datenerfassungseinrichtung (80) drahtlose Kommunikationen direkt von dem Mainframe-Datendepot (16) empfangen kann.

13. Paketverfolgungssystem nach einem der vorhergehenden Ansprüche, wobei die mindestens eine Dateneingabeeinrichtung eine Tastatur (76) umfasst, die mehrere Tasten umfasst, und wobei mindestens eine der mehreren Tasten mehrere ihr zugeordnete Funktionen aufweist.

14. Paketverfolgungssystem nach Anspruch 13, wobei die Datenerfassungseinrichtung (80) einen Berührungsschirm (77) enthält und wobei mindestens eine Funktion der mehreren Funktionen, die der mindestens einen der mehreren Tasten entspricht, auf dem Berührungsschirm angezeigt wird.

15. Paketverfolgungssystem nach einem der vorhergehenden Ansprüche, weiterhin mit einer Basisstation, an die die Datenerfassungseinrichtung (80) zum Kommunizieren von Paketdaten zu dem Mainframe-Datendepot (16) angedockt werden kann.

16. Paketverfolgungssystem nach Anspruch 15, wobei die Basisstation zur Kommunikation mit dem Mainframe-Datendepot (16) über ein Mobilfunksystem ausgelegt ist.

17. Paketverfolgungssystem nach einem der vorhergehenden Ansprüche, wobei die Datenerfassungseinrichtung (80) einen Speicher (85) enthält, der ausgelegt ist zum Speichern der gesammelten Paketdaten und wobei die von der Datenerfassungseinrichtung (80) direkt zu dem Mainframe-Datendepot (16) übertragenen gesammelten Daten von nicht direkt zu dem Mainframe-Datendepot (16) übertragenen Daten unterschieden werden können.

18. Datenerfassungseinrichtung nach einem der vorhergehenden Ansprüche, wobei die Paketdaten eine digitalisierte Kundenunterschrift umfassen.

19. Datenerfassungseinrichtung nach einem der vorhergehenden Ansprüche, wobei die Paketdaten Daten umfassen, die den Abschluss einer Paketzustellung darstellen.

20. Datenerfassungseinrichtung nach einem der vorhergehenden Ansprüche, wobei die Paketdaten Daten umfassen, die die Identität eines Pakets darstellen.

21. Datenerfassungseinrichtung nach einem der vorhergehenden Ansprüche, wobei die mindestens eine Dateneingabeeinrichtung (88) ein Strichcodescanner (75) ist.

22. Verfahren zum Verfolgen von Paketdaten unter Verwendung einer drahtlosen Datenerfassungseinrichtung (15, 25, 30, 80) und eines Übertragungssystems, wobei das Verfahren den folgenden Schritt umfasst:

Verwendung der Datenerfassungseinrichtung (80) zum Sammeln und Speichern von Paketverfolgungsdaten;
und **gekennzeichnet ist durch** die weiteren Schritte:

Übertragen mindestens einiger der gesammelten und gespeicherten Paketverfolgungsdaten direkt an ein entferntes Mainframe-Datendepot (16) über ein drahtloses Funkgerät (84) der Datenerfassungseinrichtung (80) oder über ein Kommunikationsfunkgerät einer Andockeinrichtung für die Datenerfassungseinrichtung (80); und
Pflegen einer zugänglichen Paketverfolgungsdatenbank in dem entfernten Mainframe-Datendepot (16) auf der Basis der übertragenen gesammelten und gespeicherten Paketverfolgungsdaten, wobei die Paketverfolgungsdatenbank die übertragenen gesammelten Paketverfolgungsdaten speichert, die vom entfernten Mainframe-Datendepot (16) empfangen wurden.

23. Verfahren nach Anspruch 22, wobei die Datenerfassungseinrichtung einen Berührungsschirm umfasst und das Verfahren die Schritte des Empfangens einer Unterschriftseingabe auf dem Schirm unter Verwendung eines Stifts und das Erfassen der Unterschrift als Daten beinhaltet.

24. Verfahren nach Anspruch 23, mit dem Schritt des Darstellens der Unterschrift auf dem Schirm während der Ausführung davon.

25. Verfahren nach Anspruch 23 oder 24, mit dem Schritt des Umklappens der Unterschrift um 180° auf dem Schirm.

**Revendications**

1. Système de poursuite de paquets (10), comprenant :

un dispositif portatif (15, 25, 30, 40) d'acquisition de données capable de collecter et de mémoriser des données de paquets, le dispositif (80) d'acquisition de données comprenant au moins un dispositif (88) de saisie de données, un dispositif de liaison à une station d'accueil comprenant une mémoire de données, le dispositif (80) d'acquisition de données étant associé au dispositif de liaison à une station d'accueil, le dispositif (80) d'acquisition de données étant destiné à communiquer avec le dispositif de liaison à une station d'accueil par une voie (78) de communications infrarouges, et le dispositif (80) d'acquisition de données étant destiné à transmettre les données collectées et mémorisées de paquets du dispositif (80) d'acquisition de données au dispositif de liaison à une station d'accueil, et
un entrepôt distant (16) de données d'ordinateur principal, l'entrepôt distant (16) de données d'ordinateur principal étant capable de recevoir les données collectées et mémorisées de paquets du dispositif (80) d'acquisition de données et du dispositif de liaison à une station d'accueil, et l'entrepôt distant (16) de données d'ordinateur principal conservant une base de données de paquets destinée à comprendre les données collectées et mémorisées de paquets, le système étant **caractérisé en ce que** le dispositif d'acquisition de données comprend un dispositif radioélectrique sans fil (84), le dispositif de liaison à une station d'accueil comprend un dispositif radioélectrique de communications, et l'entrepôt distant (16) de données d'ordinateur principal est capable de recevoir directement les données du dispositif radioélectrique sans fil (84) et du dispositif radioélectrique de communications.

2. Système de poursuite de paquets selon la revendication 1, dans lequel un dispositif de saisie de données au moins (88) est un écran tactile (77).

3. Système de poursuite de paquets selon la revendication 2, dans lequel l'écran tactile (77) comprend un élément de capture de signature qui peut recevoir les signatures saisies avec un style.

4. Système de poursuite de paquets selon la revendication 2 ou 3, dans lequel l'écran tactile (77) est capable de représenter une signature pendant l'exécution de celle-ci.

5. Dispositif d'acquisition de données selon la revendication 4, dans lequel l'écran est destiné à reproduire numériquement une signature sur l'écran (77) pendant l'exécution de la signature.

6. Système de poursuite de paquets selon la revendication 4 ou 5, dans lequel l'écran tactile (77) est capable de retourner la signature lorsque celle-ci a été entièrement exécutée.

7. Dispositif d'acquisition de données selon la revendication 6, comprenant en outre un élément (93) de retournement de signature, dans lequel l'élément (93) de retournement de signature retourne verticalement une signature reproduite numériquement de manière que la signature produite numériquement soit retournée par rapport à la signature reproduite numériquement sur l'écran après l'exécution de celle-ci.

8. Système de poursuite de paquets selon l'une quelconque des revendications 2 à 7, dans lequel l'écran tactile (77) est un dispositif d'affichage LCD.

9. Dispositif d'acquisition de données selon la revendication 8, dans lequel l'écran tactile a à la fois des possibilités LCD et des possibilités de capture de signature, et l'écran tactile est destiné à recevoir des signatures saisies avec un style.

10. Système de poursuite de paquets selon l'une quelconque des revendications précédentes, dans lequel le dispositif de liaison à une station d'accueil est destiné à être disposé sur un véhicule de distribution.

11. Système de poursuite de paquets selon l'une quelconque des revendications précédentes, comprenant en outre un réseau radioélectrique de transmission de données de paquets destiné à transmettre des communications directement du dispositif (80) d'acquisition de données à l'entrepôt (16) de données d'ordinateur principal.

12. Système de poursuite de paquets selon l'une quelconque des revendications précédentes, dans lequel le dispositif radioélectrique sans fil (84) est un dispositif radioélectrique bidirectionnel par l'intermédiaire duquel le dispositif (80) d'acquisition de données peut recevoir directement les communications sans fil de l'entrepôt (16) de données d'ordinateur principal.

13. Système de poursuite de paquets selon l'une quelconque des revendications précédentes, dans lequel le dispositif de saisie de données a moins comporte un clavier (76) muni de plusieurs touches, et l'une au moins des touches a plusieurs fonctions qui lui sont associées.

14. Système de poursuite de paquets selon la revendication 13, dans lequel le dispositif (80) d'acquisition de données comporte un écran tactile (77), et dans lequel une fonction au moins parmi les fonctions correspondant à l'une au moins des touches et affichée sur l'écran tactile.

15. Système de poursuite de paquets selon l'une quelconque des revendications précédentes, comprenant en outre une station de base à laquelle peut être relié le dispositif (80) d'acquisition de données pour la communication de données de paquets à l'entrepôt (16) de données d'ordinateur principal.

16. Système de poursuite de paquets selon la revendication 15, dans lequel la station de base est destinée à communiquer avec l'entrepôt (16) de données d'ordinateur principal par un réseau cellulaire de communications.

17. Système de poursuite de paquets selon l'une quelconque des revendications précédentes, dans lequel le dispositif (80) d'acquisition de données comporte une mémoire (85) destinée à mémoriser les données collectées de paquets, et dans lequel les données collectées transmises directement du dispositif (80) d'acquisition de données à l'entrepôt (16) de données d'ordinateur principal peuvent être distinguées des données collectées qui ne sont pas directement transmises à l'entrepôt (16) de données d'ordinateur principal.

18. Dispositif d'acquisition de données selon l'une quelconque des revendications précédentes, dans lequel les données de paquets comportent une signature numérisée de client.

19. Dispositif d'acquisition de données selon l'une quelconque des revendications précédentes, dans lequel les données de paquets comprennent des données représentant la fin de la distribution d'un paquet.

20. Dispositif d'acquisition de données selon l'une quelconque des revendications précédentes, dans lequel les données de paquets comprennent des données représentant l'identité d'un paquet.

21. Dispositif d'acquisition de données selon l'une quelconque des revendications précédentes, dans lequel le dispositif de saisie de données au moins (88) est un lecteur de code à barres (75).

22. Procédé de poursuite de données de paquets à l'aide d'un dispositif (15, 25, 30, 80) d'acquisition de données sans fil et d'un système de transmission, le procédé comprenant l'étape suivante :

   l'utilisation du dispositif (80) d'acquisition de données pour collecter et mémoriser les données de poursuite de paquets,

   **caractérisé en ce qu'**il comprend les étapes supplémentaires suivantes :

   la transmission d'au moins certaines des données collectées et mémorisées de poursuite de paquets directement à un entrepôt distant (16) de données d'ordinateur principal par l'intermédiaire d'un dispositif radioélectrique sans fil (84) du dispositif (80) d'acquisition de données ou par l'intermédiaire d'un dispositif radioélectrique de communications d'un dispositif de liaison à une station d'accueil du dispositif (80) d'acquisition de données, et
   l'entretien d'une base de données accessible de poursuite de paquets dans l'entrepôt distant (16) de données d'ordinateur principal en fonction des données collectées et mémorisées de poursuite de paquets qui sont transmises, la base de données de poursuite de paquets mémorisant les données collectées et mémorisées de poursuite de paquets qui sont transmises et reçues par l'entrepôt distant (16) de données d'ordinateur principal.

23. Procédé selon la revendication 22, dans lequel le dispositif d'acquisition de données comprend un écran tactile, et le procédé comprend les étapes de réception d'une signature saisie sur l'écran avec un style, et de capture de la signature sous forme de données.

24. Procédé selon la revendication 23, comprenant l'étape de représentation de la signature sur l'écran lors de son exécution.

25. Procédé selon la revendication 23 ou 24, comprenant une étape de retournement de la signature de 180° sur l'écran.

FIG. 1.

*FIG. 2.*

FIG. 3.

FIG. 4.

*FIG. 5A.*

*FIG. 5B.*

EP 1 292 913 B1

# DATA ACQUISITION DEVICE
## 80

**PROCESSOR** 82

**RADIO** 84

**ANTENNA 90**

**83 BUS**

**MEMORY** 89

TOUCH SCREEN CONTROL MODULE — 91

SIGNATURE DISPLAY MODULE — 92

SCREEN FLIPPING MODULE — 93

COMMUNICATION MODULE — 94

KEY PAD CONTROL MODULE — 95

OPERATING SYSTEM — 96

**INPUT** 88

BAR CODE SCANNER — 75

KEY PAD — 76

TOUCH SCREEN — 77

INFRARED PORT — 78

**OUTPUT** 87

ACOUSTICAL MODEM — 79

SPEAKER — 74

**BATTERY** 86

**85**
STORAGE DEVICE

PACKAGE TRACKING DATA — 97

*FIG. 6.*

23

*FIG. 7A.*

FIG. 7B.

FIG. 8.

```
            ┌──────────────────────────────────┐
            │          STYLUS DOWN             │──── 125
            └──────────────────────────────────┘
                           │
                           ▼
                    ╱──────────╲
                   ╱  IS STYLUS ╲
                  │  STILL DOWN? │──────────────▶  ( DONE )
                   ╲           130
                    ╲──────────╱
                           │
                           ▼
       ┌─────────────────────────────────────┐
       │  CAPTURE POINT LOCATION OF STYLUS (X,Y) │──── 140
       └─────────────────────────────────────┘
                           │
                           ▼
       ┌─────────────────────────────────────┐
       │  ENQUEUE COORDINATES VALUES (X,Y)    │
       │  REPRESENTING POINT LOCATION OF STYLUS │──── 150
       │  IN SLIDING QUEUE                    │
       └─────────────────────────────────────┘
                           │
                           ▼
       ┌─────────────────────────────────────┐
       │  COMPUTE AVERAGE OF QUEUED           │──── 160
       │  COORDINATE VALUES                   │
       └─────────────────────────────────────┘
                           │
                           ▼
                    ╱──────────╲
                   ╱ IS NEXT POINT╲
                  │ LOCATION NEAR  │
                  │   AVERAGE      │
                  │  COORDINATE    │
                   ╲  VALUES?    170
                    ╲──────────╱
                           │
                           ▼
       ┌─────────────────────────────────────┐
       │  CONVERT POINT LOCATION TO LCD       │──── 180
       │  COORDINATES                         │
       └─────────────────────────────────────┘
                           │
                           ▼
       ┌─────────────────────────────────────┐
       │  DISPLAY DIGITALLY CREATED POINT     │──── 190
       │  REPRESENTATIVE OF POINT LOCATION    │
       └─────────────────────────────────────┘
                           │
                           ▼
       ┌─────────────────────────────────────┐
       │  ADVANCE THE SLIDING QUEUE           │──── 200
       └─────────────────────────────────────┘
```

*FIG. 9.*